# FASCICULE DE BREVET EUROPEEN

(11) **EP 2 867 947 B1**
(45) Date de publication et mention de la délivrance du brevet: **27.04.2016**
(21) Numéro de dépôt: 13732181.6
(22) Date de dépôt: 28.06.2013
(51) Int. Cl.: H01M 8/10, C25B 9/02, C25B 9/10, H01M 4/88, H01M 8/02

(54) **PROCÉDÉ DE FABRICATION D'UN ASSEMBLAGE ELECTRODE/MEMBRANE ÉCHANGEUSE DE PROTONS**
VERFAHREN ZUR HERSTELLUNG EINER ELEKTRODEN-/PROTONENAUSTAUSCHMEMBRANANORDNUNG
METHOD FOR MANUFACTURING AN ELECTRODE/PROTON-EXCHANGE MEMBRANE ASSEMBLY

(30) Priorité: 29.06.2012 FR 1256227
(43) Date de publication de la demande: 06.05.2015
(73) Titulaire: Commissariat à l'Energie Atomique et aux Energies Alternatives, 75015 Paris (FR)
(72) Inventeur: VINCENT, Rémi, F-38000 Grenoble (FR); BARTHE, Benoît, F-73310 Chindrieux (FR); TREMBLAY, Denis, F-38340 Pommiers-la-Placette (FR)
(74) Mandataire: GIE Innovation Competence Group
(86) Numéro de dépôt international: PCT/EP2013/063648
(87) Numéro de publication internationale: WO 2014/001510

(56) Documents cités:
- JP-A- 2010 129 435
- US-A1- 2003 121 603
- US-A1- 2008 105 354
- US-A1- 2010 291 473
- US-B1- 6 524 736

## Description

L'invention concerne les membranes échangeuse de protons (dites PEM pour Proton Exchange Membrane en langue anglaise), et en particulier les procédés de fabrication de telles membranes. Les membranes échangeuses de protons sont utilisées en particulier dans les électrolyseurs et dans les piles à combustible.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé et ionisé sur une électrode de la pile et du dioxygène de l'air est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Le procédé de production d'hydrogène à partir de l'eau le plus répandu consiste ainsi à utiliser le principe de l'électrolyse. Pour la mise en oeuvre de tels procédés, des électrolyseurs munis d'une membrane échangeuse de protons (dites PEM pour Proton Exchange Membrane en langue anglaise) sont connus. Dans un tel électrolyseur, une anode et une cathode sont fixées de part et d'autre de la membrane échangeuse de protons (pour former l'assemblage membrane/électrodes) et mises en contact avec de l'eau. Une différence de potentiel est appliquée entre l'anode et la cathode. Ainsi, de l'oxygène est produit à l'anode par oxydation de l'eau. L'oxydation au niveau de l'anode génère également des ions H⁺ qui traversent la membrane échangeuse de protons jusqu'à la cathode et des électrons sont renvoyés à la cathode par l'alimentation électrique. Au niveau de la cathode, les ions H⁺ sont réduits pour générer du dihydrogène.

En pratique, un tel électrolyseur comprend généralement des plaques d'alimentation disposées de part et d'autre de l'assemblage membrane/électrodes. Des collecteurs de courant sont disposés entre les plaques d'alimentation et l'assemblage membrane/électrodes.

Un tel dispositif d'électrolyse est confronté à des effets indésirables. Un enjeu d'un tel électrolyseur à membrane échangeuse de protons est d'accroître son rendement, d'augmenter sa durée de vie, de réduire son coût de fabrication et de garantir un niveau de sécurité élevé. Les enjeux sont identiques pour une pile à combustible à membrane échangeuse de protons. Ces paramètres sont fortement dépendants du procédé de fabrication des électrodes.

Selon un premier type de procédé de fabrication d'un assemblage membrane/électrodes, de l'encre catalytique est déposée en couche sur les couches de diffusion gazeuse. Après séchage de cette encre, l'assemblage membrane/électrodes est réalisé par un pressage à chaud. Le pressage à chaud vise à optimiser le contact entre une électrode et la membrane, afin de réduire au maximum leur résistance de contact et ainsi optimiser les performances de l'AME.

L'opération de pressage à chaud induit malheureusement une dégradation de la membrane et affecte de façon notable la durée de vie de l'AME. Du fait de la rugosité élevée des couches de diffusion gazeuse, une pression non négligeable doit ainsi être appliquée lors du pressage à chaud. En outre, une telle impression altère fortement la porosité des couches de diffusion de gaz et par conséquent les performances du dispositif incluant l'AME.

Pour résoudre certains de ces inconvénients, un second type de procédé de fabrication propose de déposer directement de l'encre électrocatalytique sur la membrane échangeuse de protons, de façon à former une couche formant une électrode.

Un tel procédé engendre une déformation par gonflement humide de la membrane lors du dépôt de l'encre. Le procédé engendre ensuite une déformation de la membrane par rétractation au séchage. Ces déformations sont non négligeables et engendrent des contraintes mécaniques au niveau des dépôts qui peuvent conduire à des craquelures de la couche électroactive formée. De telles craquelures réduisent la percolation électronique de l'électrode et réduisent ainsi sa conductivité électrique. De plus, les craquelures peuvent altérer la cohésion entre l'électrode et la membrane. Ainsi, une partie non négligeable de l'électrode peut devenir non fonctionnelle.

Par ailleurs, lors du fonctionnement, la membrane est totalement immergée dans l'eau rendant son taux de gonflement maximal. Les contraintes mécaniques à l'interface entre l'électrode et la membrane sont ainsi maximales, induisant une détérioration accrue de l'électrode. Cette détérioration de l'électrode réduit le rendement énergétique de l'électrolyseur ainsi que sa durée de vie.

Un autre problème de la formation d'une électrode par dépôt catalytique sur la membrane est l'endommagement de cette membrane par les solvants présents dans l'encre (par exemple de l'éthanol ou de l'isopropanol). D'une part, les solvants engendrent une augmentation de la perméabilité de la membrane aux gaz. Une partie des gaz produits à l'anode et à la cathode traverse ainsi la membrane échangeuse de protons par diffusion. Cela induit d'une part des problèmes de pureté des gaz produits mais induit également des problèmes de sécurité. La proportion d'hydrogène dans l'oxygène doit notamment absolument rester inférieure à 4 %, une telle proportion étant la limite inférieure d'explosivité de l'hydrogène dans l'oxygène. D'autre part, l'endommagement de la membrane par les solvants réduit sa durée de vie.

Un troisième procédé de fabrication de l'assemblage membrane/électrodes permet d'obtenir un compromis optimal entre les performances de l'AME et sa durée de vie. Ce procédé comprend une étape préalable d'impression de la couche électrocatalytique sur un support lisse et hydrophobe, insensible aux solvants présents dans l'encre. Le support d'impression présente notamment une énergie de surface très faible et une rugosité très faible. Après formation de l'électrode par séchage de l'encre électrocatalytique, l'électrode est assemblée à la membrane par un pressage à chaud. Du fait de la faible adhésion de l'électrode sur le support d'impression, ce pressage à chaud peut être réalisé avec une température et une pression réduites. La dégradation de la membrane lors de l'étape de pressage à chaud est ainsi réduite. En outre, l'électrode formée par impression sur un support lisse présente une épaisseur et une composition homogènes, ce qui limite également l'altération de la membrane lors du pressage à chaud. En outre, l'électrode étant assemblée sur la membrane après séchage, la membrane n'est pas placée en contact avec les solvants de l'encre et ne subit pas d'altération correspondante.

Le document US2008/0105354 décrit un tel procédé d'assemblage membrane/électrodes pour une pile à combustible. L'assemblage membrane/électrodes formé comporte des renforts. Chaque renfort entoure les électrodes. Les renforts sont formés à partir de films polymères et renforce l'assemblage membrane/électrodes au niveau des arrivées de gaz et de liquide de refroidissement. Les renforts facilitent la manipulation de l'assemblage membrane/électrodes pour éviter sa détérioration. Les renforts limitent également les variations dimensionnelles de la membrane en fonction de la température et de l'humidité. En pratique, les renforts se superposent à la périphérie des électrodes, afin de limiter le phénomène de perméation de gaz à l'origine d'une détérioration de l'assemblage membrane/électrodes.

Selon ce procédé, on réalise un renfort en formant une ouverture dans la partie médiane d'un film polymère. Le renfort comporte un adhésif sensible à la pression sur une face. On récupère un assemblage membrane/électrodes et l'on vient placer l'ouverture du renfort à l'aplomb d'une électrode. Le renfort recouvre la périphérie de cette électrode. Un pressage est ensuite réalisé pour solidariser le renfort à la membrane et à la bordure de l'électrode, par l'intermédiaire de l'adhésif. En variante, un renfort dépourvu d'adhésif peut être solidarisé à la membrane durant l'étape de pressage à chaud, au moyen d'une température de pressage supérieure à la température de transition vitreuse de la membrane. Des découpes sont ensuite réalisées dans le renfort pour former les arrivées de gaz et de liquide.

Du fait de la surépaisseur entre l'électrode et le renfort, la pression et la température doivent être accrues lors de l'assemblage au détriment de la durée de vie de la membrane. Par ailleurs, le procédé de fabrication reste relativement complexe et multiplie le nombre d'étapes susceptibles d'induire une défaillance de l'assemblage membrane/électrodes.

Le document JP2010 129435 A décrit un procédé de fabrication d'un assemblage membrane/électrodes avec des étapes d'adhésion à chaud entre une membrane échangeuse de protons et un masque en forme de cadre comprenant deux couches de dépôt d'une encre électrocatalytique sur la membrane à travers l'ouverture du masque, et de retrait d'une couche composant le masque.

Ce procédé conduit à des altérations de la membrane et/ou des électrodes durant son exécution. Le document US6524736 décrit un procédé de fabrication d'un assemblage membrane/électrodes avec une étape d'adhésion à chaud entre une membrane échangeuse de protons et une électrode formée par séchage d'encre électrocatalytique sur un support qui est éliminé après l'assemblage.

L'invention vise à résoudre un ou plusieurs de ces inconvénients. L'invention porte ainsi sur un procédé de fabrication d'un assemblage membrane/électrodes, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un exemple de pile à combustible ;
- la figure 2 est une vue de dessus d'un support à l'issue d'une première étape d'un procédé de fabrication ;
- la figure 3 est une vue de dessus du support à l'issue d'une deuxième étape du procédé de fabrication ;
- la figure 4 est une vue de dessus du support à l'issue d'une troisième étape du procédé de fabrication ;
- la figure 5 est une vue du côté du support durant la mise en oeuvre de la troisième étape ;
- la figure 6 est une vue en coupe de côté d'une pile à combustible durant une quatrième étape d'un procédé de fabrication ;
- la figure 7 est une vue en coupe de côté de la pile à combustible durant une cinquième étape d'un procédé de fabrication ;
- la figure 8 est une vue en coupe de côté de la pile à combustible durant une sixième étape d'un procédé de fabrication ;
- la figure 9 est un logigramme illustrant différentes étapes du procédé de fabrication.

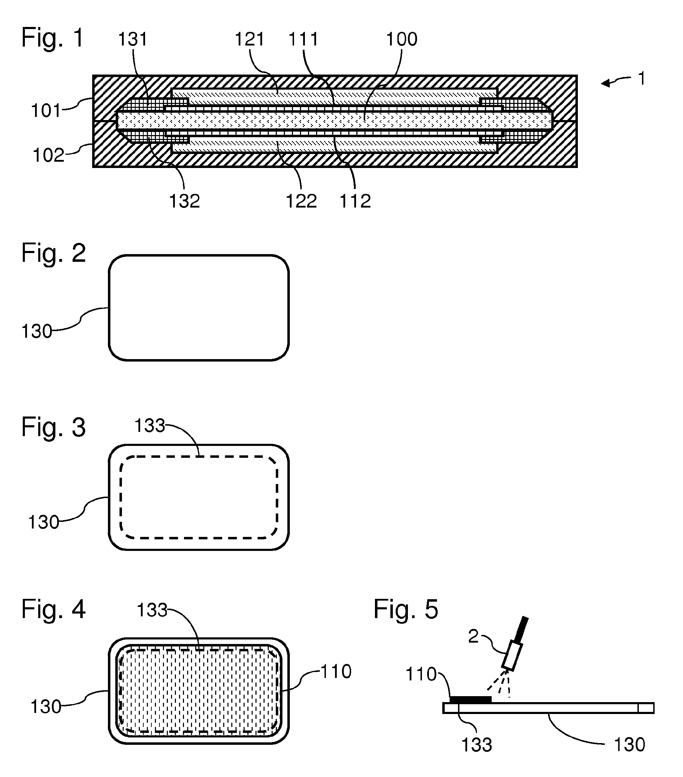

La figure 1 est une vue en coupe schématique d'un exemple de pile à combustible 1, incluant un assemblage membrane/électrodes fabriqué selon un exemple de procédé selon l'invention. La pile à combustible 1 est du type à membrane échangeuse de protons ou membrane à électrolyte polymère. Bien que non illustré, la pile à combustible 1 peut comprendre plusieurs cellules superposées. La pile à combustible 1 comprend une source de carburant alimentant en dihydrogène une entrée de chaque cellule. La pile à combustible 1 comprend également une source d'air alimentant une entrée de chaque cellule en air, contenant de l'oxygène utilisé comme oxydant. Chaque cellule comprend également des canaux d'échappement. Chaque cellule peut également présenter un circuit de refroidissement de façon connue en soi.

Chaque cellule comprend un assemblage membrane/électrodes ou AME. Chaque assemblage membrane/électrodes comprend une couche d'électrolyte formée par exemple d'une membrane polymère 100.

L'assemblage membrane/électrodes comprend également une cathode 111 et une anode 112 placées de part et d'autre de la membrane 100 et fixées sur cette membrane 100.

La couche d'électrolyte forme une membrane semi-perméable 100 permettant une conduction protonique tout en étant imperméable aux gaz présents dans la cellule. La membrane 100 empêche également un passage des électrons entre l'anode 112 et la cathode 111.

Chaque cellule présente des plaques de guidage d'écoulement 101 et 102, disposées en vis-à-vis respectivement de la cathode 111 et de l'anode 112. Chaque cellule présente une couche de diffusion de gaz 121 disposée entre la cathode 111 et la plaque de guidage 101. Chaque cellule présente par ailleurs une couche de diffusion de gaz 122 disposée entre l'anode 112 et la plaque de guidage 102. Deux plaques de guidage de cellules adjacentes peuvent former une plaque bipolaire, de façon connue en soi. Les plaques de guidage peuvent être formées de feuilles métalliques comportant une surface en relief définissant des canaux d'écoulement.

De façon connue en soi, durant le fonctionnement de la pile à combustible 1, de l'air s'écoule entre l'AME et la plaque de guidage 101, et du dihydrogène s'écoule entre l'AME et la plaque de guidage 102. Au niveau de l'anode 112, le dihydrogène est ionisé pour produire des protons qui traversent l'AME. Les électrons produits par cette réaction sont collectés par la plaque de guidage 101. Les électrons produits sont ensuite appliqués sur une charge électrique connectée à la pile à combustible 1 pour former un courant électrique. Au niveau de la cathode 111, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 1 V.

L'invention propose un procédé de fabrication d'un assemblage membrane/électrodes. L'invention propose de former une électrode par dépôt d'une encre électrocatalytique sur un support, comportant par exemple un contour de prédécoupe. Le support et l'électrode sont solidarisés par adhésion à la membrane. La partie du support présente à l'intérieur du contour de prédécoupe est séparée du reste du support et de l'électrode.

On limite ainsi les manipulations de l'électrode ainsi que le nombre d'étapes d'adhésion durant le procédé de fabrication, ce qui permet à la fois de réduire le coût d'un tel procédé et de limiter l'altération de la membrane et/ou de l'électrode.

Les figures 2 à 8 illustrent différentes étapes de la fabrication d'un assemblage membrane/électrodes selon un exemple de procédé selon l'invention. Le procédé décrit en référence aux figures 2 à 8 pourra être mis en oeuvre pour solidariser à la membrane 100, le support 131 et la cathode 111 et/ou le support 132 et l'anode 112.

La figure 2 est une vue de dessus d'un support 130 fourni. Le support 130 est avantageusement plan.

La figure 3 est une vue de dessus du support 130 après la réalisation d'un contour prédécoupé 133. Le contour prédécoupé 133 sépare ainsi le support 130 entre une bordure périphérique et une partie médiane. Le contour prédécoupé 133 peut être réalisé sur une face du support 130, l'autre face du support 130 étant lisse.

La figure 4 est une vue de dessus du support 130 après le dépôt d'une encre électrocatalytique en phase liquide, destinée à former une électrode 110 après séchage. L'électrode 110 peut être solidifiée par tous moyens appropriés. L'étape de solidification de l'encre électrocatalytique peut mettre en oeuvre un séchage destiné à provoquer l'évaporation du solvant. Tout procédé de séchage connu en soi peut être utilisé, notamment au moyen d'un four ou d'un écoulement d'air chaud. Dans l'exemple illustré, l'électrode 110 formée s'étend au-delà du contour prédécoupé 133. Dans l'exemple illustré, l'électrode 110 formée s'étend en retrait par rapport au bord du support 130.

Comme illustré à la figure 5, le dépôt de l'encre électrocatalytique sur le support 130 peut être réalisé selon un procédé de jet d'encre, par exemple par l'intermédiaire d'une buse 2. L'encre électrocatalytique peut également être déposée par tout autre moyen approprié, par exemple par enduction. Lors du dépôt de l'encre électrocatalytique, le support 130 est maintenu sensiblement horizontal.

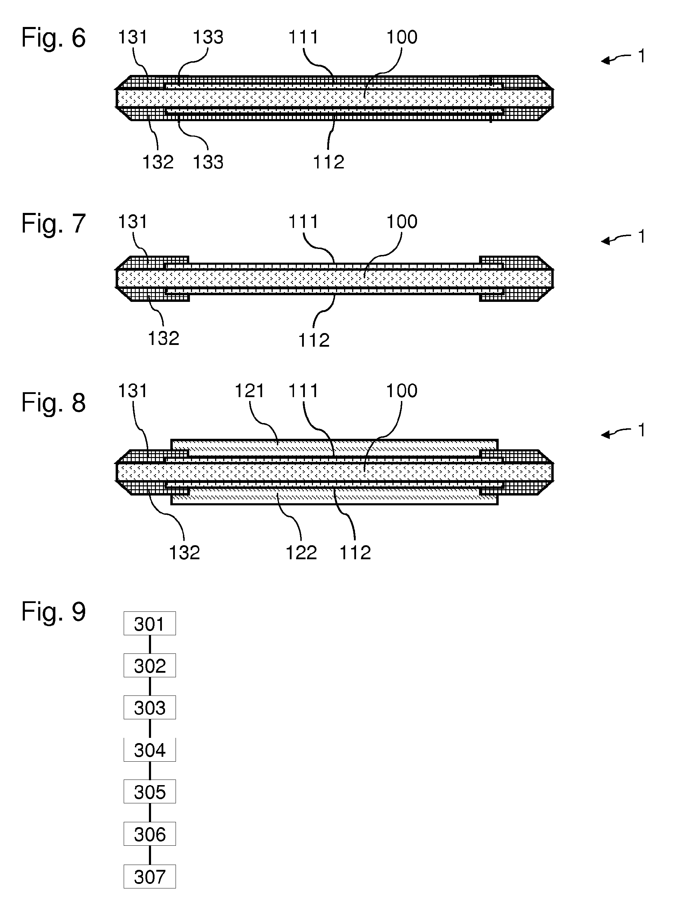

La figure 6 est une vue en coupe d'une cellule de pile à combustible 1 formée en utilisant un support 131 et une cathode 111, ainsi qu'un support 132 et une anode 112, obtenus selon les étapes illustrées aux figures 2 à 5. À cette étape du processus de fabrication, un assemblage membrane/électrodes est réalisé en solidarisant d'une part le support 131 et la cathode 111 sur une face de la membrane 100, et en solidarisant d'autre part le support 132 et l'anode 112 sur une autre face de la membrane 100.

La solidarisation est réalisée par adhésion du support 131 et de la cathode 111 sur une face de la membrane 100, et par adhésion du support 132 et de l'anode 112 sur l'autre face de la membrane 100. Un support et une électrode étant solidarisés à la membrane 100 durant une même étape, l'assemblage membrane/électrodes subit moins de manipulations et est donc moins détérioré. En particulier, l'adhésion du support 131 et de la cathode 111 à la membrane 100 peut être réalisée lors d'une même étape de pressage à chaud. De même, l'adhésion du support 132 et de l'anode 112 à la membrane 100 peut être réalisée lors d'une même étape de pressage à chaud. Une même étape de pressage à chaud peut même être utilisée pour l'adhésion du support 131 et de la cathode 111 à la membrane 100 et pour l'adhésion du support 132 et de l'anode 112 à la membrane 100.

À l'issue de cette étape, la cathode 111 est interposée entre la membrane 100 et le support 131, et l'anode 112 est interposée entre la membrane 100 et le support 132. Le support 131 et le support 132 recouvrent respectivement la cathode 111 et l'anode 112. Le support 131 et 132 sur lesquels la cathode 111 et l'anode 112 sont formés servent ainsi de renforts pour l'assemblage membrane/électrodes, renforçant sa résistance mécanique et facilitant sa manipulation pour le reste du processus de fabrication.

La figure 7 est une vue en coupe de la cellule de pile à combustible 1 après le retrait d'une partie des supports 131 et 132 respectivement. Le retrait de ces parties des supports 131 et 132 permet de découvrir respectivement la partie médiane de la cathode 111 et la partie médiane de l'anode 112. On retire ainsi la partie médiane du support 131 et la partie médiane du support 132, situées à l'intérieur du contour prédécoupé 133. Le retrait d'une partie médiane du support 130 sans détérioration de l'électrode 110 est facilité par la présence du contour prédécoupé 133.

Avantageusement, à l'issue de cette étape de retrait, les supports 131 et 132 peuvent faire l'objet de découpes d'orifices traversants à leur périphérie, par exemple pour ménager des passages d'écoulement de gaz ou de liquide de refroidissement. En effectuant le retrait des supports 131 et 132 postérieurement à ces découpes, les électrodes 111 et 112 restent protégées par les supports 131 et 132 durant les découpes.

La figure 8 est une vue en coupe de la cellule de pile à combustible 1 après la mise en place de couches de diffusion gazeuse 121 et 122. La couche de diffusion gazeuse 121 est ainsi placée en contact avec la partie découverte de la cathode 111. La périphérie de la couche de diffusion gazeuse 121 recouvre au moins une partie du support 131 dans cet exemple. La couche de diffusion gazeuse 122 est placée en contact avec la partie découverte de l'anode 112. La périphérie de la couche de diffusion gazeuse 122 recouvre au moins une partie du support 132 dans cet exemple.

Pour obtenir la cellule de pile à combustible 1 illustrée à la figure 1, l'assemblage membrane/électrodes muni des couches de diffusion gazeuse 121 et 122 peut ensuite être inclus entre deux plaques métalliques de guidage d'écoulement 101 et 102.

La figure 9 est un chronogramme permettant de lister les différentes étapes réalisées dans un procédé selon un exemple de mise en oeuvre de l'invention.

Lors de l'étape 301, un support 130 est fourni.

Lors de l'étape 302, un contour de prédécoupe 133 est ménagé dans le support 130.

Lors de l'étape 303, de l'encre électrocatalytique est déposée sur une face du support 130.

Lors de l'étape 304, le support 130 et l'électrode 110 formée sont solidarisés par adhésion sur une membrane échangeuse de protons 100.

Lors de l'étape 305, une partie du support 130 est retirée de façon à découvrir la partie médiane de l'électrode 110.

Lors de l'étape 306, une couche de diffusion gazeuse est positionnée contre la partie médiane découverte de l'électrode 110.

Lors de l'étape 307, l'assemblage membrane/électrodes formé est inclus entre deux plaques de guidage d'écoulement.

Le support 130 présente avantageusement une énergie d'interface au moins égale à 20mN/m, de préférence au moins égale à 25mN/m, et de façon optimale au moins égale à 30mN/m. De telles valeurs d'énergie d'interface permettent de favoriser l'adhésion du support à la membrane 100 par pressage à chaud. Le support 130 présente avantageusement une énergie d'interface inférieure ou égale à 60 mN/m, de préférence au maximum de 50 mN/m. De telles valeurs d'énergie d'interface permettent de réduire l'adhésion entre le support 130 et l'électrode 110, ce qui facilite le retrait de la partie médiane de ce support.

Le support 130 inclut avantageusement un polymère dont la température de transition vitreuse tg est plus élevée que la température de pressage à chaud, le cas échéant. Cette température de transition vitreuse est avantageusement supérieure d'au moins 30°C à la température de pressage à chaud, et de préférence supérieure d'au moins 40°C. L'utilisation de telles températures de transition vitreuse permet de limiter les variations dimensionnelles du support 130 durant a pressage à chaud. Cette température de transition vitreuse sera avantageusement au moins égale à 120°C.

La face du support 130 destinée à recevoir un dépôt d'encre électrocatalytique comporte avantageusement une rugosité inférieure ou égale à 2µm, de préférence inférieure ou égale à 1µm, de façon à favoriser l'homogénéité de la composition et de l'épaisseur de l'électrode formée par ce dépôt, et de façon à limiter l'adhérence avec l'électrode formée par ce dépôt.

Afin de faciliter le retrait de la partie médiane du support 130 lors d'une étape ultérieure, et afin de limiter les risques de détérioration d'une électrode formée lors d'une étape ultérieure, le contour prédécoupé 133 comporte avantageusement des renfoncements ponctuels espacés de moins de 1mm. D'autres motifs de prédécoupe peuvent bien entendu être réalisés, par exemple sous la forme d'une gorge continue formant un amincissement localisé du support 130.

Avantageusement, l'électrode 110 formée s'étend sur la bordure périphérique du support 130. Ainsi, la bordure du support 130 se superpose à la périphérie de l'électrode 110 et favorise la solidarisation de l'électrode 110 à la membrane 100 lors du retrait de la partie médiane du support 130.

L'encre électrocatalytique déposée sur le support 130 inclut avantageusement un matériau électrocatalytique et un produit polymérisable ou un produit polymérisé en un polymère conducteur de protons. Le produit polymérisable est destiné à se solidifier pour fournir une certaine résistance mécanique à l'électrode 110 et permettre également la diffusion de l'eau et des ions jusqu'au matériau électrocatalytique lorsque l'électrode est assemblée dans la pile à combustible 1. L'encre électrocatalytique peut par exemple être séchée en la plaçant dans un environnement à une température comprise entre 50 et 150°.

Une électrode 110 ainsi formée présentera avantageusement une épaisseur comprise entre 2 et 20 µm, et de préférence entre 5 et 10 µm.

Le matériau électrocatalytique présente des propriétés catalytiques adaptées pour la réaction catalytique à réaliser. Le matériau électrocatalytique peut se présenter sous la forme de particules ou de nano particules incluant des atomes métalliques. Le matériau catalyseur peut notamment comprendre des oxydes métalliques. Dans les formulations mentionnées ultérieurement, le matériau électrocatalytique est un oxyde d'iridium. Des métaux tels que le platine, l'or, l'argent, le cobalt, le platine, le ruthénium peuvent également être utilisés.

Pour limiter l'adhérence entre l'encre électrocatalytique et le support 130, l'encre déposée comporte avantageusement une tension superficielle supérieure à l'énergie d'interface du support 130.

Le cas échéant, le ionomère de l'électrode 110 formée présente avantageusement une température de transition vitreuse tg inférieure à la température du pressage à chaud. La température de transition vitreuse de l'électrode 110 pourra être comprise entre 95 et 110°C. L'électrode 110 pourra inclure un ionomère commercialisé sous la référence Nafion. Certaines compositions d'un tel ionomère comportent une température de transition vitreuse de 100°C.

Pour favoriser l'adhésion de l'électrode 110 à la membrane 100 lors d'une étape de pressage à chaud, la membrane 100 et l'électrode 110 comportent avantageusement un même matériau polymère. Ce matériau polymère présente avantageusement une température de transition vitreuse inférieure à la température du pressage à chaud. Le matériau polymérisable utilisé pour former ce matériau polymère pourra être le ionomère commercialisé sous la référence commerciale Nafion DE2020.

Pour une adhésion par pressage à chaud, la température du pressage à chaud est avantageusement comprise entre 100 et 180 °C, et de préférence comprise entre 120 et 140°C.

Bien que le procédé décrit fasse appel à une étape de retrait d'une partie du support correspondant à un contour prédécoupé, l'électrode peut être formée sur un support 130 dépourvu de prédécoupe, le support 130 étant découpé intégralement après la formation de l'électrode 110.

Bien que l'exemple décrit illustre la fabrication d'un assemblage membrane/électrodes intégré dans une pile à combustible, l'invention s'applique bien entendu également à l'intégration d'un tel assemblage dans un dispositif d'électrolyse.

## Revendications

1. Procédé de fabrication d'un assemblage membrane/électrodes, comprenant les étapes de :
- dépôt d'une encre électrocatalytique sur une face d'un support (130), de façon à former une électrode (110) sur le support;
- solidarisation du support et de l'électrode formée sur une membrane échangeuse de protons (100) par adhésion ;
et **caractérisé par** le
- retrait d'une partie du support de façon à découvrir au moins une partie médiane de l'électrode formée.

2. Procédé de fabrication d'un assemblage membrane/électrodes selon la revendication 1, dans lequel l'étape de dépôt de l'encre électrocatalytique comprend le dépôt d'une encre incluant un matériau électrocatalytique et un produit polymérisable en un polymère conducteur de protons.

3. Procédé de fabrication d'un assemblage membrane/électrodes selon la revendication 1 ou 2, dans lequel ledit support (130) sur lequel l'encre électrocatalytique est déposée comporte un contour prédécoupé (133).

4. Procédé de fabrication d'un assemblage membrane/électrodes selon la revendication 3, dans lequel le contour prédécoupé (133) comporte des renfoncements ponctuels espacés de moins de 1 mm.

5. Procédé de fabrication d'un assemblage membrane/électrodes selon l'une quelconque des revendications précédentes, dans lequel l'étape de retrait de la partie de support est effectuée de sorte que la partie du support restant solidaire de la membrane recouvre la périphérie de ladite électrode (110).

6. Procédé de fabrication d'un assemblage membrane/électrodes selon l'une quelconque des revendications précédentes, dans lequel l'étape de solidarisation du support (130) et de l'électrode (110) formée inclut l'adhésion par pressage à chaud du support et de l'électrode à la membrane échangeuse de protons.

7. Procédé de fabrication d'un assemblage membrane/électrodes selon la revendication 6, dans lequel ledit support (130) est un matériau présentant une température de transition vitreuse supérieure d'au moins 30°C à la température du pressage à chaud.

8. Procédé de fabrication d'un assemblage membrane/électrodes selon les revendications 2 et 7, dans lequel la température du pressage à chaud est supérieure à la température de transition vitreuse du matériau polymérisé inclus dans l'électrode (110).

9. Procédé de fabrication d'un assemblage membrane/électrodes selon la revendication 8, dans lequel la membrane comprend un matériau polymérisé identique au matériau polymérisé de l'électrode (110).

10. Procédé de fabrication d'un assemblage membrane/électrodes selon l'une quelconque des revendications précédentes, dans lequel le support (131) sur lequel ladite encre électrocatalytique (111) est déposée présente une énergie d'interface au moins égale à 20J/m² et au plus égale à 60 J/m², de préférence comprise entre 30 et 50 J/m².

11. Procédé de fabrication d'un assemblage membrane/électrodes selon l'une quelconque des revendications précédentes, dans lequel le support (131) sur lequel ladite encre électrocatalytique (111) est déposée présente une rugosité inférieure ou égale à 2 µm, de préférence inférieure ou égale à 1µm.

12. Procédé de fabrication d'un assemblage membrane/électrodes selon l'une quelconque des revendications précédentes, dans lequel l'étape de retrait de ladite partie du support (130) est précédée d'une étape de découpe d'orifices traversants à la périphérie dudit support.

13. Procédé de fabrication d'un assemblage membrane/électrodes selon l'une quelconque des revendications précédentes, comprenant en outre le placement d'une couche de diffusion gazeuse (121) en contact avec ladite partie découverte de l'électrode.

14. Procédé de fabrication d'un assemblage membrane/électrodes selon l'une quelconque des revendications précédentes, comprenant une étape d'inclusion de la membrane (100) à laquelle ladite électrode et ledit support sont solidarisés entre deux plaques métalliques de guidage d'écoulement.

## Patentansprüche

1. Verfahren zur Herstellung einer Membran-Elektroden-Anordnung, das die folgenden Schritte enthält:
- Aufbringen einer Elektrokatalysatortinte auf eine Seite eines Trägers (130), um eine Elektrode (110) auf dem Träger zu bilden;
- feste Verbindung des Trägers und der gebildeten Elektrode auf einer Protonentauschermembran (100) durch Adhäsion;
und **gekennzeichnet durch**
- das Entfernen eines Bereichs des Trägers, um mindestens einen mittleren Bereich der gebildeten Elektrode aufzudecken.

2. Verfahren zur Herstellung einer Membran-Elektroden-Anordnung nach Anspruch 1, wobei der Schritt des Aufbringens der Elektrokatalysatortinte das Aufbringen einer Tinte enthält, die ein elektrokatalytisches Material und ein Produkt umfasst, das in ein protonenleitendes Polymer polymerisiert werden kann.

3. Verfahren zur Herstellung einer Membran-Elektroden-Anordnung nach Anspruch 1 oder 2, wobei der Träger (130), auf den die Elektrokatalysatortinte aufgebracht wird, einen vorab ausgeschnittenen Umriss (133) aufweist.

4. Verfahren zur Herstellung einer Membran-Elektroden-Anordnung nach Anspruch 3, wobei der vorab ausgeschnittene Umriss (133) punktförmige Verstärkungen aufweist, die einen Abstand von weniger als 1 mm haben.

5. Verfahren zur Herstellung einer Membran-Elektroden-Anordnung nach einem der vorhergehenden Ansprüche, wobei der Schritt des Entfernens des Trägerbereichs so ausgeführt wird, dass der fest mit der Membran verbundene verbleibende Bereich den Umfang der Elektrode (110) bedeckt.

6. Verfahren zur Herstellung einer Membran-Elektroden-Anordnung nach einem der vorhergehenden Ansprüche, wobei der Schritt der festen Verbindung des Trägers (130) und der gebildeten Elektrode (110) die Adhäsion durch Heißpressen des Trägers und der Elektrode an der protonentauschenden Membran umfasst.

7. Verfahren zur Herstellung einer Membran-Elektroden-Anordnung nach Anspruch 6, wobei der Träger (130) ein Material ist, das eine Glasübergangstemperatur um mindestens 30°C höher als die Temperatur des Heißpressens hat.

8. Verfahren zur Herstellung einer Membran-Elektroden-Anordnung nach den Ansprüchen 2 und 7, wobei die Temperatur des Heißpressens höher als die Glasübergangstemperatur des in der Elektrode (110) enthaltenen polymerisierten Materials ist.

9. Verfahren zur Herstellung einer Membran-Elektroden-Anordnung nach Anspruch 8, wobei die Membran ein polymerisiertes Material gleich dem polymerisierten Material der Elektrode (110) enthält.

10. Verfahren zur Herstellung einer Membran-Elektroden-Anordnung nach einem der vorhergehenden Ansprüche, wobei der Träger (131), auf den die Elektrokatalysatortinte (111) aufgebracht wird, eine Oberflächenenergie mindestens gleich 20 J/m² und höchstens gleich 60 J/m² hat, die vorzugsweise zwischen 30 und 50 J/m² liegt.

11. Verfahren zur Herstellung einer Membran-Elektroden-Anordnung nach einem der vorhergehenden Ansprüche, wobei der Träger (131), auf den die Elektrokatalysatortinte (111) aufgebracht wird, eine Rauheit geringer als oder gleich 2 µm aufweist, vorzugsweise geringer als oder gleich 1 µm.

12. Verfahren zur Herstellung einer Membran-Elektroden-Anordnung nach einem der vorhergehenden Ansprüche, wobei vor dem Schritt des Entfernens des Bereichs vom Träger (130) ein Schritt des Ausschneidens von Durchgangslöchern am Umfang des Trägers liegt.

13. Verfahren zur Herstellung einer Membran-Elektroden-Anordnung nach einem der vorhergehenden Ansprüche, das außerdem die Anordnung einer Gasdiffusionsschicht (121) in Kontakt mit dem aufgedeckten Teil der Elektrode enthält.

14. Verfahren zur Herstellung einer Membran-Elektroden-Anordnung nach einem der vorhergehenden Ansprüche, das einen Schritt des Einschlusses der Membran (100), mit der die Elektrode und der Träger fest verbunden sind, zwischen zwei Metallplatten zur Strömungsführung enthält.

## Claims

1. Process for manufacturing a membrane/electrodes assembly, comprising steps of:
- depositing an electrocatalytic ink on one face of a support (130), so as to form an electrode (110) on the support; and
- securely fastening the support and the formed electrode to a proton exchange membrane (100) by adhesion;
and **characterized in that**
- a portion of the support is removed so as to expose at least a median portion of the formed electrode.

2. Process for manufacturing a membrane/electrodes assembly according to Claim 1, in which the step of depositing the electrocatalytic ink comprises depositing an ink including an electrocatalytic material and a product polymerizable into a protonically conductive polymer.

3. Process for manufacturing a membrane/electrodes assembly according to Claim 1 or 2, in which said support (130) on which the electrocatalytic ink is deposited includes a precut outline (133).

4. Process for manufacturing a membrane/electrodes assembly according to Claim 3, in which the precut outline (133) includes discrete recesses spaced apart by less than 1 mm.

5. Process for manufacturing a membrane/electrodes assembly according to any one of the preceding claims, in which the step of removing the support portion is carried out so that the portion of the support remaining securely fastened to the membrane covers the periphery of said electrode (110).

6. Process for manufacturing a membrane/electrodes assembly according to any one of the preceding claims, in which the step of securely fastening the support (130) and the formed electrode (110) includes making the support and the electrode adhere to the proton exchange membrane by hot pressing.

7. Process for manufacturing a membrane/electrodes assembly according to Claim 6, in which said support (130) is a material having a glass transition temperature higher by at least 30°C than the temperature of the hot pressing.

8. Process for manufacturing a membrane/electrodes assembly according to Claims 2 and 7, in which the temperature of the hot pressing is higher than the glass transition temperature of the polymerised material included in the electrode (110).

9. Process for manufacturing a membrane/electrodes assembly according to Claim 8, in which the membrane comprises a polymerized material identical to the polymerized material of the electrode (110).

10. Process for manufacturing a membrane/electrodes assembly according to any one of the preceding claims, in which the support (131) on which said electrocatalytic ink (111) is deposited has an interface energy at least equal to 20 J/m² and at most equal to 60 J/m² and preferably comprised between 30 and 50 J/m².

11. Process for manufacturing a membrane/electrodes assembly according to any one of the preceding claims, in which the support (131) on which said electrocatalytic ink (111) is deposited has a roughness lower than or equal to 2 µm and preferably lower than or equal to 1 µm.

12. Process for manufacturing a membrane/electrodes assembly according to any one of the preceding claims, in which the step of removing said portion of the support (130) is preceded by a step of cutting through-orifices in the periphery of said support.

13. Process for manufacturing a membrane/electrodes assembly according to any one of the preceding claims, furthermore comprising placing a gas diffusion layer (121) in contact with said exposed portion of the electrode.

14. Process for manufacturing a membrane/electrodes assembly according to any one of the preceding claims, comprising a step of including the membrane (100), to which said electrode and said support are securely fastened, between two flow-guiding metal plates.
